# DEMANDE DE BREVET EUROPEEN

(11) **EP 4 722 133 A1**
(43) Date de publication de la demande: **08.04.2026**
(21) Numéro de dépôt: 25205162.8
(22) Date de dépôt: 28.09.2025
(51) Int. Cl.: B65G 1/137, G06Q 10/087, G06Q 10/083

(54) **PROCÉDÉ DE PRÉPARATION DE COMMANDES, ET ENSEMBLE CONFIGURÉ POUR LA MISE EN UVRE DU PROCÉDÉ**

(30) Priorité: 07.10.2024 FR 2410784
(71) Demandeur: Exotec Product France, 59170 Croix (FR)
(72) Inventeur: MOULIN, Romain, 59800 LILLE (FR)
(74) Mandataire: Plasseraud IP

(57) **Abrégé**

Procédé de préparation de commandes mis en œuvre dans un système de stockage et de retrait automatisé, le procédé comprenant
/A/ Charger les cartons d'approvisionnement (CaP), chacun sur un conteneur (C) pour former des ensembles de stockage (ES),
/B/ Transporter les ensembles de stockage jusqu'à des emplacements de stockage de la structure de stockage (GTP),
/C/ Préparer des commandes audit au moins un poste de préparation de commande, comprenant pour tout ou partie des commandes, le prélèvement (PICK) d'au moins un article (Ai) depuis l'un au moins des ensembles de stockage (ES) et placer ledit au moins un article (Ai) dans un carton de commande (CaC),
/D/ au moins un carton d'approvisionnement (CaP) étant vidé en /C/ et dans lequel le carton d'approvisionnement (CaP) vidé dudit au moins un article est utilisé comme ledit carton de commande (CaC) pour au moins l'une des commandes en /C/.

## Description

La présente divulgation concerne un procédé de préparation de commandes. La présente divulgation concerne encore un ensemble comprenant un système de stockage et de retrait et des cartons comprenant un ou plusieurs articles, le système comprenant une unité de contrôle configurée pour la mise en œuvre du procédé de préparation de commandes.

### Domaine technique

La présente divulgation relève du domaine des solutions de stockage ASRS (pour « *automated storage and retrieval system* ») à savoir des systèmes de stockage et de retrait automatisés, ci-après désignés systèmes ASRS, qui sont des installations, contrôlées par des ordinateurs, configurées pour déplacer automatiquement des charges, généralement des conteneurs, dans des emplacements de stockage déterminés d'une structure de stockage telle qu'un rack, et configurées pour les retirer.

À cet effet, les systèmes ASRS comportent des moyens de transport automatisés, qui peuvent comprendre différentes solutions techniques, telles que des convoyeurs motorisés, en particulier à rouleaux, des ascenseurs, des descenseurs, des navettes, des transstockeurs, voire encore des chariots autoguidés (ou AGV), circulant suivant deux dimensions horizontales de l'espace, voire circulant encore selon une troisième dimension verticale, ces moyens de transport étant configurés pour assurer le chargement automatisé de la structure de stockage avec des conteneurs qui sont pour la plupart mono-articles, destinés à servir de conteneur de collecte.

On entend par conteneur mono-articles, le fait que le conteneur comprend dans son volume, un ou plusieurs articles structurellement identiques, c'est-à-dire des articles aux tailles, formes et donc de structures identiques. Dans certains cas, les conteneurs peuvent contenir des articles qui sont structurellement identiques, mais par strictement identiques, par exemple des articles structurellement identiques, mais de couleurs différentes. Dans le cadre de la présente divulgation, le contenu des conteneurs peut faire référence à des articles qui peuvent être structurellement identiques ou non.

Les conteneurs utilisés font partie du système ASRS, et peuvent prendre typiquement la forme d'un bac, bien souvent plastique. Ces conteneurs comprennent différentes fonctions spécifiquement adaptées pour leur coopération avec les autres éléments de l'ASRS, et en particulier avec les moyens de transport, ou encore avec la structure de stockage de l'ASRS.

Ainsi ces fonctions spécifiques peuvent être, à titre d'exemple :
- des dimensions et surfaces fonctionnelles spécifiques pour le support dans les emplacements de stockage de la structure de stockage, par exemple pour leur support sur des équerres d'un rack,
- une résistance mécanique adaptée pour résister à une charge, sans fléchir et ainsi sans risque de chute, voire encore pour résister à une telle charge même en cas de projection d'eau d'un système de lutte contre un incendie
- des surfaces fonctionnelles configurées pour être agrippées par des systèmes de préhension automatisés, en vue de leur chargement/déchargement automatisés, dans les emplacements de stockage, par exemple des reliefs positifs (en saillie) ou négatifs (en creux) destinés à engager typiquement avec des parties mâles ou femelles, d'un préhenseur mécanisé etc...

Ces systèmes de stockage et de retrait trouvent une application particulière pour la préparation d'une ou une plusieurs commande(s). Une commande peut comprendre un article, ou plusieurs articles identiques. Toutefois bien souvent, une commande est composée d'une combinaison d'articles différents.

À cet effet les solutions de stockage comprennent typiquement une ou plusieurs stations de préparation de commande, manuelles ou robotisées. Une telle station de préparation de commande (manuelle) peut ainsi comprendre un poste de préparation de commande pour un opérateur, avec typiquement une interface numérique typiquement un écran affichant la composition de la commande en cours, et permettant à l'opérateur de prélever un ou plusieurs articles, à partir d'un ou plusieurs conteneurs typiquement mono-articles acheminés automatiquement par les moyens de transport depuis la structure de stockage jusqu'à la station et afin de les déposer manuellement, dans un emballage de commande, classiquement un carton de commande destiné à l'expédition, au niveau de la station, le carton étant ouvert pour l'assemblage de la commande. Ce carton est ensuite fermé, typiquement par le rabattement de volets supérieurs, bien souvent en vue d'une expédition ou d'une livraison.

La station de commande, peut être elle-même automatisée, à savoir comprendre à cet effet un robot de préparation de commande, typiquement un bras multiaxes muni d'un préhenseur, bien souvent un système à ventouse pneumatique ou encore un préhenseur à doigts, ce robot étant configuré pour prélever automatiquement un ou plusieurs articles du ou des conteneurs bien souvent mono-articles, et de les déposer dans le carton de commande, au niveau de la station de préparation de commande.

Régulièrement, et au fur de à mesure des commandes, les conteneurs spécifiques, typiquement mono-articles du système ASRS se vident et le système de stockage du système ASRS nécessite d'être réapprovisionné, en conteneurs mono-articles, remplis par lesdits mono-articles.

À cet effet, les entrepôts de stockage comprennent, outre la structure de stockage du système ASRS recevant les conteneurs spécifiques, desservis par les moyens de transport automatique, en vue des préparations de commande, de manière automatisée, un stockage de masse, à fonction de tampon, à l'intérieur duquel sont stockés des cartons de réapprovisionnement, fermés, typiquement mono-articles. Un tel stockage de masse peut être lui-même automatisé (ou non).

Lorsqu'un réapprovisionnement est nécessaire, un carton bien souvent mono-articles est retiré du stockage de masse, puis ouvert, typiquement par le déploiement de volets supérieurs du carton, puis les articles du carton mono-articles sont entièrement retirés et chargés dans l'un des conteneurs totalement ou partiellement vides, spécifiques de l'ASRS, au niveau d'un poste d'approvisionnement, et en vue d'obtenir un conteneur mono-articles rempli des articles. Le conteneur réapprovisionné est acheminé par les moyens de transport de l'ASRS jusqu'à un des emplacements de stockage de l'ASRS.

### Technique antérieure

Afin de réduire l'empreinte environnementale des opérations de préparation de commande, il est connu, dans de tels entrepôts pour système ASRS de récupérer le carton de réapprovisionnement, ouvert, vidé des articles, ayant permis le remplissage du conteneur vide de l'ASRS, et de l'acheminer directement jusqu'à l'une des stations de préparation de commande du système ASRS, pour servir d'emballage de commande, et plus spécifiquement de carton de commande/d'expédition, à l'intérieur duquel l'opérateur (ou le bras robotisé) dépose le ou les articles de la commande.

Selon les constatations des inventeurs, une telle opération de recyclage du carton, depuis le poste d'approvisionnement et jusqu'à la station de préparation de commande (ou les stations de préparation de commande), nécessite d'ajouter des convoyeurs supplémentaires à ceux déjà existants du système ASRS, afin d'acheminer les cartons vides, directement depuis le poste d'approvisionnement, et jusqu' à un des postes de préparation de commande, en contournant la structure de stockage du système ASRS, ce qui grève notamment la surface au sol de l'installation et augmente son coût.

Un tel procédé de préparation de commande peut être amélioré.

### Résumé

La présente divulgation vient améliorer la situation.

Il est proposé selon un premier aspect un procédé de préparation de commandes mis en œuvre dans un système de stockage et de retrait automatisé comprenant :
- une structure de stockage présentant des emplacements de stockage,
- au moins une station de préparation de commande pour la préparation des commandes,
- des conteneurs destinés à recevoir des cartons d'approvisionnement et des cartons de commande.

Le procédé comprend un approvisionnement de la structure de stockage à partir d'articles provenant de cartons d'approvisionnement contenant chacun au moins un article.

le procédé comprenant :
/A/ Charger les cartons d'approvisionnement, chacun sur un conteneur pour former des ensembles de stockage,
/B/ Transporter les ensembles de stockage jusqu'à des emplacements de stockage de la structure de stockage,
/C/ Préparer des commandes audit au moins un poste de préparation de commande,
comprenant pour tout ou partie des commandes, le prélèvement d'au moins un article depuis l'un au moins des ensembles de stockage et placer ledit au moins un article dans un carton de commande,
/D/ au moins un carton d'approvisionnement étant vidé par ledit prélèvement lors de l'une des préparations de commande en /C/ et dans lequel le carton d'approvisionnement vidé dudit au moins un article est utilisé comme ledit carton de commande pour au moins l'une des commandes en /C/.

Les caractéristiques exposées dans les paragraphes suivants peuvent, optionnellement, être mises en œuvre, indépendamment les unes des autres ou en combinaison les unes avec les autres :

Selon un mode de réalisation, les cartons d'approvisionnement sont mono-articles, en tout ou partie, comprenant chacun un ou plusieurs articles structurellement identiques.

Selon un mode de réalisation, lors des chargements en /A/, tout ou partie des cartons d'approvisionnement chargés sur les conteneurs sont des cartons fermés et dans lequel lesdits ensembles de stockage contenant les cartons sont stockés fermés dans lesdits emplacements de stockage de la structure de stockage.

Selon un autre mode de réalisation, lors des chargements en /A/, tout ou partie des cartons d'approvisionnement chargés sur les conteneurs sont des cartons ouverts, et dans lequel lesdits ensembles de stockage contenant les cartons sont stockés ouverts dans lesdits emplacements de stockage de la structure de stockage.

Selon un mode de réalisation, au moins une commande est une combinaison d'articles qui est identique au contenu du carton d'approvisionnement dudit ensemble de stockage, ledit procédé prévoit :
- /E/ retirer ledit ensemble de stockage dudit emplacement de stockage et transporter ledit carton d'approvisionnement dudit ensemble de stockage directement jusqu'à la sortie du système de stockage et de retrait, en constituant le carton de commande.

Selon un mode de réalisation, lesdits chargements en /A/ comprennent également le chargement d'au moins un conteneur avec un carton vide d'article, pour former un ensemble de stockage vide, et un transport dudit ensemble de stockage vide jusqu'à l'un des emplacements de stockage de la structure de stockage,
et dans lequel l'un au moins des cartons de commande en /C/ est le carton vide d'article dudit ensemble de stockage vide qui a été retiré dudit emplacement de stockage.

Selon un mode de réalisation, au moins une des commandes en /C/ est une combinaison d'articles comprenant une sous-combinaison, correspondant au contenu du carton d'approvisionnement dudit ensemble de stockage, duquel a été éventuellement ôté un ou plusieurs articles,
et dans lequel lors de l'étape /C/ :
- ledit ensemble de stockage est retiré dudit emplacement de stockage et transporté jusqu'à ladite au moins une station de préparation de commande ;
- au moins un deuxième ensemble de stockage comprenant un ou plusieurs articles complétant la combinaison d'articles par rapport à la sous-combinaison, est retiré d'un desdits emplacements de stockage et transporté jusqu'à la station de préparation de commande,
- au moins un article est transféré depuis ledit au moins un deuxième ensemble de stockage jusqu'audit carton d'approvisionnement dudit ensemble de stockage contenant la sous-combinaison jusqu'à obtention de la combinaison, puis successivement
- ledit carton d'approvisionnement dudit ensemble de stockage contenant la combinaison est transporté en tant que carton de commande jusqu'à une sortie du système de stockage et de retrait.

Selon un mode de réalisation, un carton d'un ensemble de stockage est extrait de la structure de stockage et vidé selon /D/
et dans lequel le procédé comprend :
- /DA/ un stockage de l'ensemble de stockage comprenant le conteneur et le carton vidé des articles dans la structure de stockage,
et dans lequel le carton d'approvisionnement utilisé en tant que carton de commande en /D/ est le carton dudit ensemble de stockage, vidé des articles, qui a été retiré dudit emplacement de stockage après le stockage selon /DA/.

Selon un mode de réalisation, le système de stockage et de retrait automatisé comprend :
- la structure de stockage comprenant les emplacements de stockage,
- les conteneurs configurés pour être stockés dans les emplacements de stockage,
- ladite au moins une station de préparation de commande, distante de la structure de stockage, au niveau desquelles l'assemblage de la commande lors des préparations de commande selon /C/,
- des moyens de transport automatisés configurés pour le transport des ensembles de stockage entre ladite au moins une station de préparation de commande et la structure de stockage, configurés pour :
   -- transporter, préalablement à l'une des préparations de commande en /C/, au moins un premier ensemble de stockage comprenant le conteneur et le carton d'approvisionnement contenant ledit au moins article nécessaire à l'une des commandes depuis ledit emplacement de stockage de la structure de stockage et jusqu'à ladite au moins une station de préparation de commande et,*
   -- transporter, préalablement à ladite préparation de commande en /C/, un deuxième ensemble de stockage comportant le conteneur et un carton de commande, depuis ledit emplacement de stockage de la structure de stockage et jusqu'à ladite au moins une station de préparation de commande,
   et dans lequel lors de ladite préparation de commande en /C/, ledit procédé comprend :
- transférer ledit au moins un article depuis ledit carton d'approvisionnement dudit premier ensemble de stockage, et jusqu'au carton de commande du deuxième ensemble de stockage.

Selon un mode de réalisation, lesdits moyens de transport automatisés peuvent être configurés pour :
- transporter, après la préparation de commande en /C/, ledit premier ensemble de stockage comprenant le conteneur et le carton d'approvisionnement auquel a été retiré ledit au moins un article depuis la station de préparation de commande, et jusqu' à un des emplacements de stockage de la structure de stockage, et/ou
- transporter ledit carton de commande jusqu'à une sortie du système de stockage et de retrait.

Selon un mode de réalisation, le procédé peut comprendre entre l'une des préparations d'une commande selon /C/ au niveau de la station de préparation de commande, d'une part, et une finalisation de ladite commande, d'autre part :
- un transport et un stockage de l'ensemble de stockage comprenant le carton de commande recevant ledit au moins un article de la commande dans un emplacement de stockage de la structure de stockage, préalablement à un transport de l'ensemble de stockage contenant le carton de commande vers une sortie du système de stockage et de retrait.

Selon un mode de réalisation, le système de stockage et de retrait automatisé peut comprendre au moins un poste d'approvisionnement pour les chargements /A/ desdits cartons d'approvisionnement sur les conteneurs en formant des ensembles de stockage, ledit poste d'approvisionnement étant distant de la structure de stockage, et des moyens de transport automatisés configurés pour le transport, des ensembles de stockage depuis le poste de réapprovisionnement, jusqu'aux emplacements de stockage de la structure de stockage.

Selon un mode de réalisation, les moyens de transport automatisés peuvent comprendre au moins une flotte de chariots autoguidés configurés pour transporter :
- les ensembles de stockage comprenant chacun le conteneur et le carton d'approvisionnement et/ou
- au moins un ensemble de stockage comprenant le conteneur et le carton de commande comprenant ledit au moins un article de la commande.

Selon un mode de réalisation, le transfert d'au moins un article lors de l'une des préparations de commande en /C/, au niveau de la station de préparation de commande, est opéré alors que le premier ensemble de stockage comprenant ledit carton d'approvisionnement est supporté par un premier chariot autoguidé, et que le deuxième ensemble de stockage comprenant le carton de commande est supporté par un deuxième chariot autoguidé, le premier chariot et le deuxième chariot agencés en deux emplacements de stationnement adjacents faisant face à un opérateur, ou positionnés dans le champ d'action d'un bras robotisé de la station de préparation de commande.

Selon un mode de réalisation, le procédé peut comprendre une finalisation de commande comprenant le transport dudit carton de commande jusqu'à une sortie dudit système de stockage et de retrait par un des chariots autoguidés supportant un ensemble de stockage comprenant un conteneur et le carton de commande contenant ladite commande et dans lequel le carton de commande est transporté par le chariot autoguidé en direction de la sortie, et dans lequel le procédé prévoit la séparation du carton de commande comprenant la commande du conteneur, puis le transport du carton de commande séparé du conteneur jusqu'à la sortie du système de stockage et de retrait.

Selon un mode de réalisation, lesdits cartons d'approvisionnement comprennent des volets de fermeture, configurés pour fermer une ouverture supérieure du carton, et dans lequel lesdits ensembles de stockage comprenant chacun le conteneur et ledit carton d'approvisionnement sont configurés pour autoriser l'ouverture des volets de fermeture, et dans lequel le procédé assure l'ouverture des conteneurs desdits ensembles de stockage par l'ouverture des volets de fermeture et un maintien des volets de fermeture rabattus contre des parois latérales du carton par l'ajout d'un système de maintien.

Selon un mode de réalisation, les conteneurs comprennent un fond et des rebords latéraux configurés pour le maintien latéral du carton d'approvisionnement ou pour le maintien du carton de commande.

La présente divulgation est encore relative à un ensemble comprenant un système de stockage et de retrait automatisé susceptible de convenir pour la mise en œuvre du procédé selon la présente divulgation et des cartons contenant un ou plusieurs articles, ledit système de stockage et de retrait, comprenant :
- des conteneurs,
- une structure de stockage comprenant les emplacements de stockage pour les conteneurs,
- au moins une station de préparation de commande, distante de la structure de stockage,
- des moyens de transport automatisés configurés pour le transport des conteneurs entre ladite au moins une station de préparation de commande et la structure de stockage, et des moyens de transport automatisés configurés pour le transport de stockage entre ladite au moins une station de préparation de commande et une sortie du système de stockage et de retrait comprenant une flotte de chariots autoguidés,
les chariots autoguidés étant équipés chacun d'un module de communication, configuré pour recevoir et transmettre des données avec une unité de contrôle distante, informatique, de manière sans fil, et dans lequel ladite unité de contrôle, distante, assure la gestion et le contrôle des moyens de transport y compris la gestion des trajectoires de guidage des chariots autoguidés sur une surface de roulement.

Selon la présente divulgation :
a) les cartons sont reçus sur les conteneurs en formant des ensembles de stockage,
b) les ensembles de stockage sont stockés dans les emplacements de stockage de la structure de stockage,
et dans lequel ladite unité de contrôle comporte un ou plusieurs processeurs, une mémoire et un jeu d'instructions configurées pour la mise en œuvre du procédé de préparation de commande selon la présente divulgation.

### Brève description des dessins

D'autres caractéristiques, détails et avantages apparaîtront à la lecture de la description détaillée ci-après, et à l'analyse des dessins annexés, sur lesquels :
**Fig. 1**

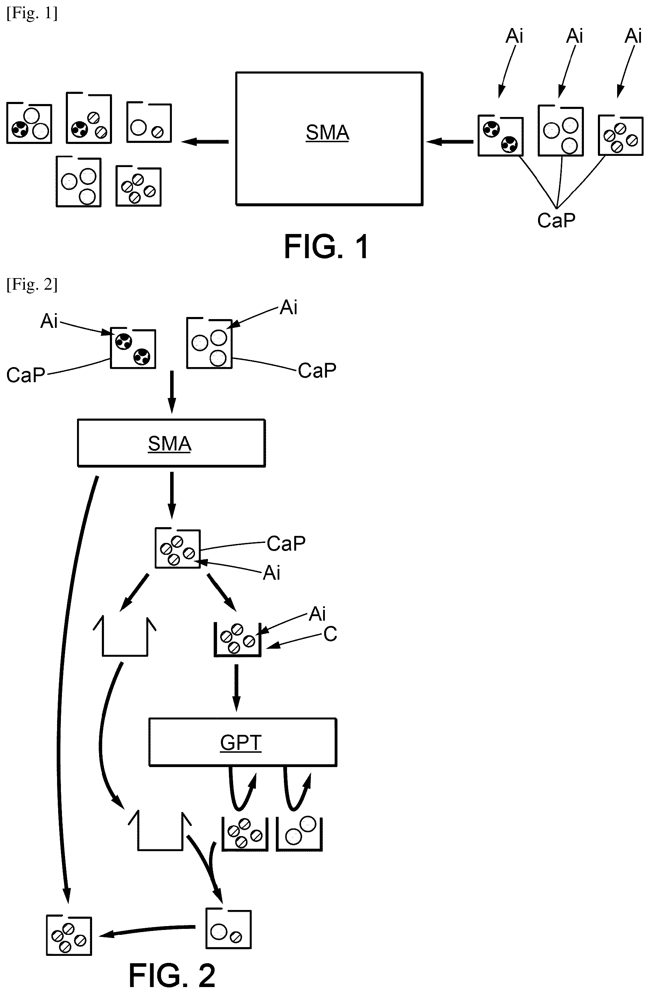

   [Fig.1] est une vue schématique d'un entrepôt selon la présente divulgation qui comprend en en entrée des cartons d'approvisionnement typiquement mono-articles, et en sortie des cartons de commande comprenant le ou les articles de la commande.
**Fig. 2**
   [Fig.2] est une vue schématique du fonctionnement d'un entrepôt selon l'état de la technique qui comprend un stockage de masse pour les cartons d'approvisionnement, et un système de stockage et de retrait automatisé comprenant une structure de stockage desservie par des moyens de transport automatisés, les cartons d'approvisionnement étant entièrement vidés des articles qui sont transférés dans des conteneurs du système de stockage et de retrait, préalablement au transfert des conteneurs approvisionnés des articles dans la structure de stockage, la vue illustrant un recyclage du carton d'approvisionnement, vidé des articles qui est convoyé pour servir de carton de commande, lors de la préparation d'une commande.
**Fig. 3**

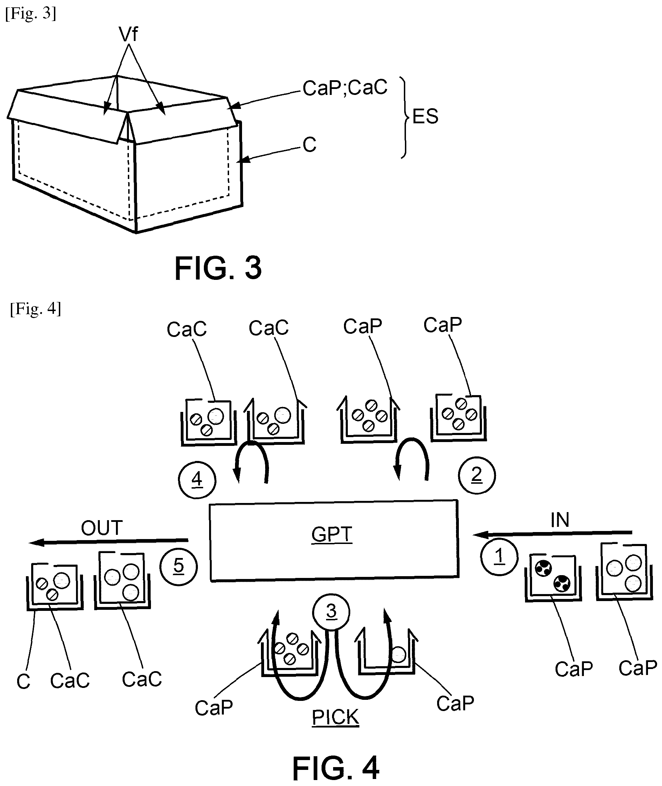

   [Fig.3] est une vue d'un mode de réalisation d'un ensemble de stockage selon la présente divulgation qui comprend un conteneur et un carton provenant d'un carton d'approvisionnement, reçu dans le conteneur, la [Fig.3] illustrant des volets supérieurs du carton maintenu ouvert par des parois latérales du conteneur, et selon une solution possible parmi d'autres pour maintenir le carton ouvert.
**Fig. 4**

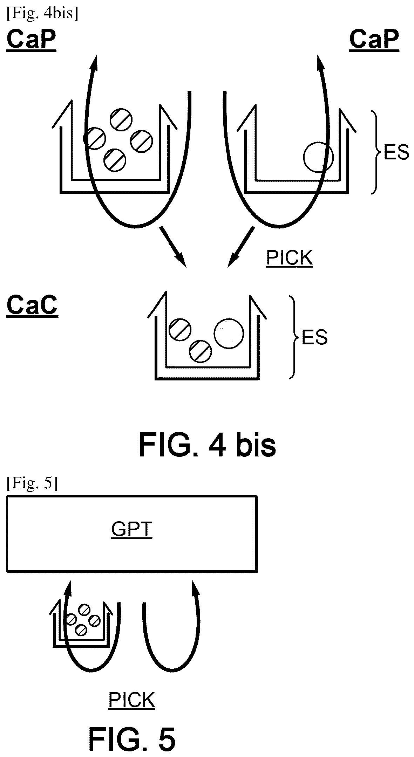

   [Fig.4] est une vue schématique du procédé selon la présente divulgation, qui comprend :
   - en entrée du système de stockage et de retrait: un approvisionnement avec un chargement des cartons d'approvisionnement dans des conteneurs de stockage et le stockage des ensembles de stockage dans des emplacements de stockage du système de stockage et de retrait, possiblement en maintenant les cartons fermés, et le cas échéant ;
   - une extraction des ensembles de stockage de la structure de stockage pour procéder à une ouverture des cartons,
   - la mise en œuvre d'un inventaire des articles contenus dans les cartons ouverts des ensembles de stockage,
   - la préparation d'une commande avec une extraction d'un ensemble de stockage pour procéder à une collecte d'au moins un article d'une commande, et en vue de son transfert dans un carton de commande,
   - la fermeture du carton de commande, une fois la combinaison du ou des articles de la commande assemblée, et
   - une extraction des ensembles de stockage contenant les cartons de commande en vue du transport des cartons de commande contenant les commandes, jusqu'à une sortie du système de stockage et de retrait.
[Fig.4bis]
   [Fig.4bis] est une vue schématique d'une préparation de commande possible, dans laquelle des articles sont prélevés de deux ensembles de stockage mono-articles et transférés dans le carton de commande d'un ensemble de stockage pour la préparation d'une commande comprenant une combinaison d'articles distincts.
**Fig. 5**
   [Fig.5] illustre une vue une schématique d'une préparation de commandes possible du procédé où le carton d'approvisionnement d'un ensemble de stockage comprend plusieurs articles qui forment une sous combinaison d'articles de la commande, ledit carton dudit ensemble de stockage étant utilisé directement comme carton de commande, sans nécessiter de vider les articles de la sous-combinaison.
**Fig. 6**

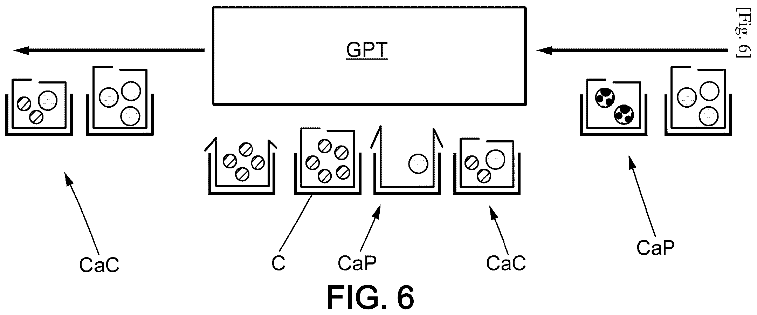

   [Fig. 6] illustre une vue schématique de l'ouverture des cartons d'approvisionnement, et de la fermeture des cartons de commande, qui peuvent être mis en œuvre respectivement :
   - lors du commencement d'un inventaire du carton d'approvisionnement dudit ensemble de stockage s'agissant de l'ouverture du carton,
   - et lors de la finalisation de la préparation de commande s'agissant de la fermeture du carton,
   et ladite ouverture du carton et la fermeture opérées au niveau d'une station de préparation de commande.
**Fig. 7**

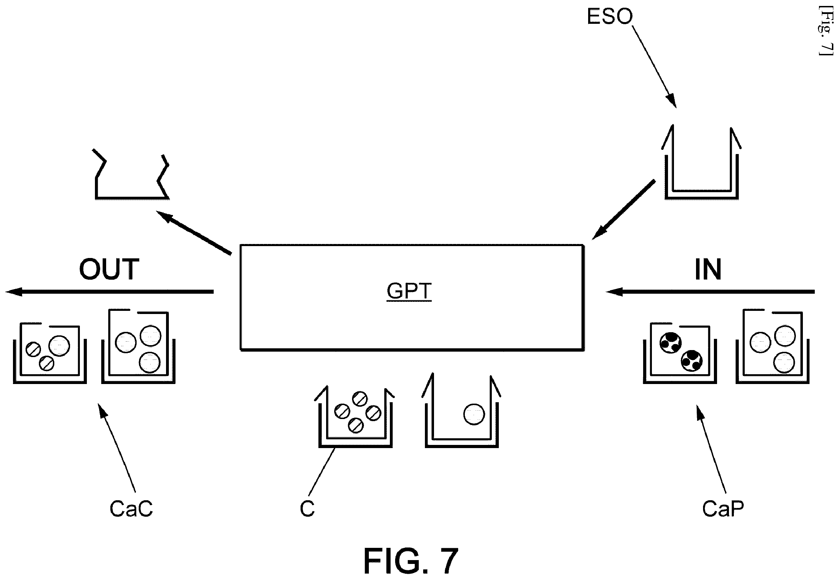

   [Fig.7] illustre schématiquement une vue du procédé qui comprend des cartons d'approvisionnement, abimés, qui ne sont pas recyclés comme carton de commande, et le chargement de cartons supplémentaires, vide d'articles, dans des conteneurs, et leur stockage dans des emplacements de stockage de la structure.
**Fig. 8**

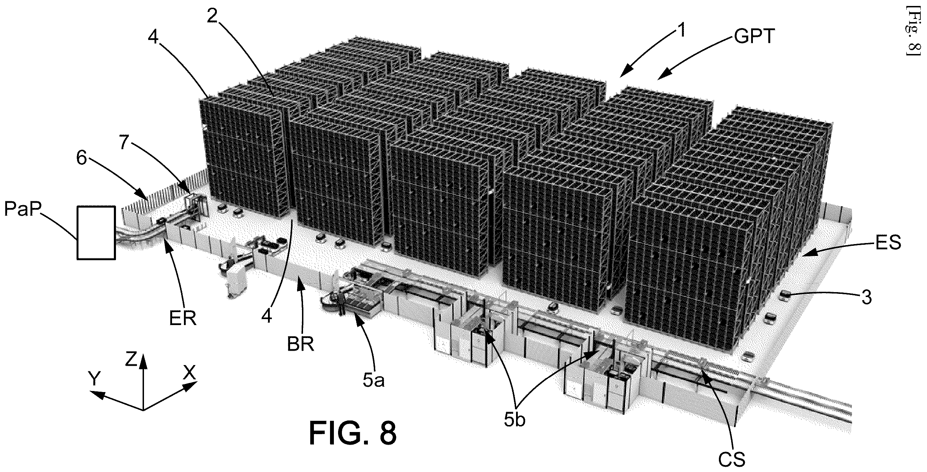

   [Fig.8] est un exemple possible d'un système de stockage et de retrait automatisé comprenant dans un enclos sécurisé, des racks de stockage séparés par des allées, et une flotte de chariots robotisés configurés pour desservir des emplacements de stockage des racks avec des ensembles de stockage selon le procédé selon la présente divulgation.
**Fig. 9**

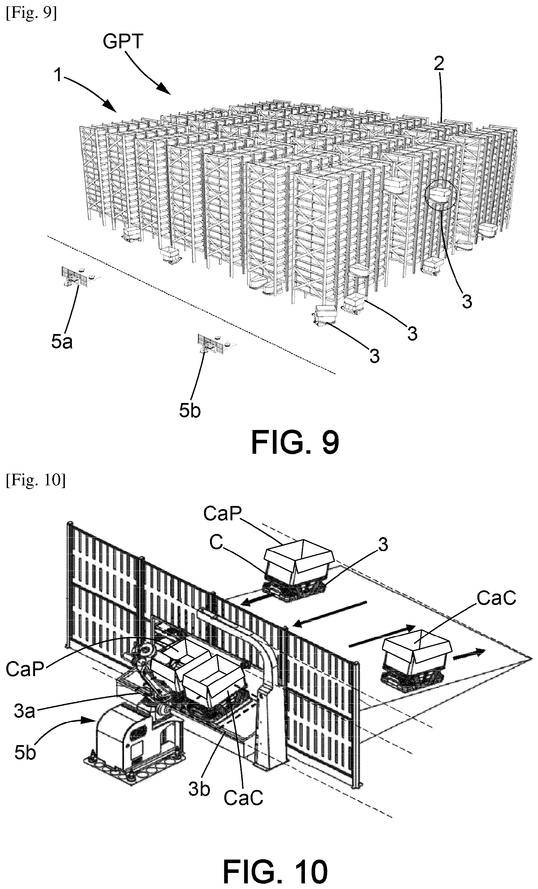

   [Fig.9] est une autre variante de système de stockage et de retrait autorisant la mise en œuvre du procédé.
**Fig. 10**
   [Fig.10] est une vue de détail de la [Fig.9].

### Description des modes de réalisation

La présente divulgation est relative à un procédé de préparation de commandes mis en œuvre dans un système de stockage et de retrait automatisé 1 comprenant :
- une structure de stockage GTP présentant des emplacements de stockage,
- au moins une station de préparation de commande pour la préparation des commandes,
- des conteneurs C destinés à recevoir des cartons d'approvisionnement CaP et des cartons de commande CaC.

La structure de stockage peut être de différentes conceptions, et en particulier.

Selon une première conception, la structure de stockage GTP peut comprendre un ou plusieurs racks, qui comprennent des emplacements de stockage, superposés, les emplacements de stockage agencés aux différents niveaux de hauteur présentant des ouvertures latérales de chargement, autorisant leur chargement indépendamment les uns des autres, et comme illustré par exemple sur les modes de réalisation des figures 8 et 9. De tels racks comprennent typiquement plusieurs colonnes d'emplacements de stockage, superposés, les différentes colonnes réparties suivant la longueur du rack de stockage.

Les racks peuvent typiquement être disposés parallèles les uns aux autres et être séparés par des allées. Dans un tel mode de réalisation, les conteneurs sont posés/retirés des emplacements de stockage suivant une direction sensiblement horizontale, le conteneur typiquement en appui sur deux interfaces mécaniques solidaires de montants du rack de stockage, et par exemple comme enseigné du document WO2024056464. La profondeur des emplacements de stockage permet de soutenir un seul conteneur, ou plusieurs conteneurs, les uns derrière les autres.

Selon une deuxième conception, la structure de stockage GTP permet de définir plusieurs colonnes de stockage, juxtaposées, chacune configurée pour recevoir un empilement de conteneurs, colonnes qui peuvent être chargées et déchargées par des chariots autoguidés circulant sur une piste de roulement, ou des rails agencés au-dessus des colonnes de stockage. Les chariots autoguidés comprennent des moyens de préhension et de levage de conteneurs, et tel qu'enseigné par le document FR 3.113.658 A1, permettant de saisir, dans l'une des colonnes de stockage, le conteneur supérieur de l'empilement et de le relever au-dessus de la piste ou des rails, le chariot autoguidé comprenant des moyens de déplacement horizontaux, motorisés, pour assurer sa circulation sur une surface horizontale et assurer le transport du conteneur jusqu'à une station de préparation de commande, typiquement en bordure de la structure de stockage.

D'autres conceptions de structure de stockage sont possibles sans sortir du cadre de la présente divulgation, et par exemple celle enseignée par le document US2018/0148259.

Le système de stockage et retrait comporte au moins une station de préparation de commande pour la préparation des commandes. Ladite au moins une station de préparation de commande comprend typiquement une ou plusieurs stations de préparation de commande.

Ladite au moins une station de préparation de commande est agencée en dehors des emplacements de stockage, par exemple latéralement à distance de ladite structure de stockage, typiquement sur un sol d'un entrepôt.

L'une au moins station de préparation de commande peut être manuelle. Une telle station de préparation de commande, manuelle, 5a peut ainsi comprendre un poste de préparation de commande pour un opérateur, avec typiquement une interface numérique typiquement un écran affichant la composition de la commande en cours, et permettant à l'opérateur de prélever un ou plusieurs articles, et afin de les déposer manuellement, dans un carton de commande, destiné à l'expédition, au niveau de la station de commande, le carton ouvert pour l'assemblage de la commande.

La station de commande 5b, peut être elle-même automatisée, à savoir comprendre à cet effet un robot de préparation de commande, typiquement un bras multiaxes muni d'un préhenseur, bien souvent un système à ventouse pneumatique, ou encore un préhenseur à doigts. Un tel robot de préparation de commande est configuré pour prélever automatiquement un ou plusieurs articles, et de les déposer dans un emballage de commande, au niveau de la station de préparation de commande.

De manière générale, le système de stockage et de retrait comprend des moyens de transport automatisés configurés pour le transport des conteneurs entre ladite au moins une station de préparation de commande et la structure de stockage, et typiquement des moyens de transport automatisés configurés pour le transport de stockage entre ladite au moins une station de préparation de commande et une sortie So du système de stockage et de retrait.

De manière générale, en particulier lorsque la structure de stockage comprend des racks de stockage 2, les moyens de transport peuvent comprendre :
- selon une première variante, un transstockeur agencé en particulier dans une allée entre deux racks de stockage et configuré pour charger/décharger latéralement les emplacements de stockage agencés suivant la hauteur et suivant la longueur des racks de stockage, voire typiquement des convoyeurs automatisés configurés pour récupérer les conteneurs déchargés par le transstockeur et les acheminer jusqu'à la station de préparation de commande, ou encore une flotte de robots circulant au sol, ou sur une table de roulement, configurés pour récupérer les conteneurs du transstockeur et les acheminer jusqu'à ladite au moins une station de préparation de commande,
- selon une seconde variante, des navettes, circulant suivant les différentes hauteurs des emplacements de stockage le long de rails horizontaux, les navettes configurées pour décharger/charger les conteneurs des emplacements de stockage et les acheminer jusqu'à un descenseur/ascenseur, configuré pour déplacer verticalement les conteneurs acheminés par les navettes, et les descendre, ou encore les monter lorsque les conteneurs sont acheminés suivant un sens inverse, voire typiquement des convoyeurs automatisés configurés pour récupérer les conteneurs déchargés par le descenseur et les acheminer jusqu'à la station de préparation de commande, ou encore une flotte de robots circulant au sol, ou sur une table de roulement, configurés pour récupérer les conteneurs du transstockeur et les acheminer jusqu'à ladite au moins une station de préparation de commande,
- selon une troisième variante, des premiers chariots autoguidés peuvent être configurés pour circuler au sol jusqu'au niveau d'une allée entre deux racks de stockage et des deuxièmes chariots autoguidés peuvent être configurés pour se déplacer en hauteur et suivant la longueur des racks pour accéder aux emplacements de stockage, saisir un conteneur, puis le déposer sur l'un des premiers chariots, et comme enseignés par US20170267452A1.
- selon une quatrième variante, des chariots autoguidés 3 comprenant chacun des moyens de déplacement horizontaux, tels que des roulettes motorisées configurés pour déplacer le chariot autoguidé sur une surface de roulement telle que le sol ou une table, par exemple selon les directions X et Y à la [Fig.8], et des moyens de grimpe comprenant des roues dentées, motorisées configurées pour se coupler avec des éléments de grimpe s'étendant verticalement suivant la hauteur des racks de stockage, typiquement solidaires des montants des racks de stockage, et configurés pour autoriser le déplacement vertical du chariot autoguidé jusqu'à un niveau de hauteur d'un emplacement de stockage.

Selon cette quatrième variante, un dispositif de préhension comprend un support monté mobile par rapport à un châssis dudit chariot entre :
- une position déployée, dans laquelle ledit support s'étend au moins partiellement sur un bord latéral dudit chariot hors de l'alignement dudit châssis ; et
- une position escamotée, dans laquelle ledit support est logé en vis-à-vis dudit châssis.

Dans la position déployée, le support mobile permet de soulever le conteneur dudit emplacement de stockage lorsque le chariot autoguidé est déplacé par les moyens de grimpe, avant de rétracter le support mobile jusqu'à la position escamotée, pour décharger un emplacement de stockage. Inversement, le chargement d'un conteneur dans un emplacement de stockage est opéré en déployant le support mobile de la position escamotée jusqu'à la position déployée, puis en déplaçant le chariot autoguidé à la descente jusqu'à ce que le conteneur repose dans ledit emplacement de stockage, et comme enseigné par exemple par le document EP3638607A1.

Selon la deuxième conception de la structure de stockage GTP comportant plusieurs colonnes de stockage, les moyens de transport comportant au moins les chariots autoguidés circulant sur des pistes de roulement agencées au-dessus des colonnes de stockage les chariots autoguidés comprenant des moyens de préhension et de levage de conteneurs, et tel qu'enseigné par le document FR 3.113.658 A1, voire des ascenseur/ descenceur pour monter/descendre les conteneurs lorsque ladite au moins une station de préparation de commande est agencée en partie basse de la structure de stockage.

De manière générale, une unité de contrôle, typiquement distante, qui comprend au moins un microprocesseur et une mémoire contenant des jeux d'instructions, est configurée pour contrôler les moyens de transport, et permettre l'acheminement des conteneurs dans le système de stockage et de retrait, depuis les emplacements de stockage jusqu'à ladite au moins une station de préparation de commande, ou encore inversement depuis ladite au moins station de préparation de commande jusqu'aux emplacements de stockage.

Ladite unité de contrôle peut encore être configurée pour contrôler les moyens de transport, pour acheminer les conteneurs, depuis une entrée ER du système de stockage et de retrait, en vue du chargement des emplacements de la structure de stockage, ou encore pour acheminer les cartons de commande CaC, préparés à ladite station de préparation de commande jusqu'à une sortie So du système de stockage et de retrait.

De manière générale, et lorsque les moyens de transport comprennent des chariots autoguidés 3 circulant horizontalement sur une zone de circulation, au sol ou sur une table de roulement, la structure de stockage GTP, en particulier les racks de stockage 2, la zone de circulation peut comprendre une barrière périphérique BR de sécurité, interdisant un accès à l'opérateur à la zone de circulation, ou encore une barrière virtuelle de sécurité inactivant le système de stockage et de retrait, au moins partiellement, lorsqu'un opérateur traverse un faisceau de détection de la barrière virtuelle.

De manière générale, et comme illustré suivant la [Fig.8] :
- l'entrée ER du système de stockage et de retrait comprend un passage à travers la barrière BR, et/ou,
- la sortie So du système de stockage et de retrait comprend un passage au travers de la barrière BR.

De manière générale, les chariots autoguidés sont équipés chacun d'un module de communication, configuré pour recevoir et transmettre des données avec ladite unité de contrôle distante, informatique, de manière sans fil, et plus particulièrement le module de communication est configuré pour recevoir des instructions de guidage transmis par l'unité de contrôle.

Ladite unité de contrôle, distante, assure la gestion et le contrôle des systèmes de transport y compris la gestion des trajectoires de guidage des chariots autoguidés sur une surface de roulement, qui peut être le sol ou encore une table de roulement.

Ladite unité de contrôle, comprend typiquement une base de données enregistrée dans une mémoire, associant des conteneurs déterminés à des contenus. Cette base de données peut être mise à jour en temps réel par exemple lors de l'approvisionnement du conteneur, lors de la collecte d'articles à ladite au moins une station de préparation de commande, ou encore plus généralement lors d'une étape d'inventaire par un
opérateur.

Une telle mise à jour peut être opérée au moyen d'une interface utilisateur lorsque la collecte est manuelle, ou encore lors d'un inventaire, ou encore au moyen d'un lecteur de codes-barres, ou encore automatiquement lorsque la station de préparation de commande est robotisée par un système de vision ou lecture de code barre.

Selon la présente divulgation, le procédé comprenant un approvisionnement de la structure de stockage à partir d'articles Ai provenant de cartons d'approvisionnement CaP contenant chacun au moins un article Ai.

Les cartons d'approvisionnement CaP sont typiquement stockés dans un stockage de masse qui est agencé typiquement dans un même entrepôt que celui du système de stockage et de retrait automatisé. Le stockage de masse peut être lui-même automatisé (ou non). Les cartons d'approvisionnement CaP sont stockés de préférence fermés dans le stockage de masse, et contiennent les articles nécessaires à l'approvisionnement des conteneurs du système de stockage de retrait.

Les cartons d'approvisionnement CaP peuvent être mono-articles, en tout ou partie, comprenant chacun un ou plusieurs articles Ai structurellement identiques.

Les cartons de commande CaC sont les emballages utilisés pour regrouper et expédier les articles d'une commande. Dans le contexte des systèmes de stockage et de retrait automatisés ASRS, ces cartons sont souvent préparés à une station de préparation de commande, où les articles sont prélevés de conteneurs et placés dans les cartons de commande, qui sont ensuite typiquement fermés et bien souvent prêts pour l'expédition.

Les conteneurs C destinés à recevoir des cartons d'approvisionnement CaP et des cartons de commande CaC font partie intégrante du système de stockage et de retrait.

Les conteneurs C font partie du système ASRS, et peuvent prendre typiquement la forme d'un bac, bien souvent plastique. Ces conteneurs peuvent comprendre différentes fonctions spécifiquement adaptées pour leur coopération avec les autres éléments de l'ASRS, et en particulier avec les moyens de transport, ou encore avec la structure de stockage de l'ASRS.

Ainsi ces fonctions spécifiques peuvent être, à titre d'exemple :
- des dimensions et surfaces fonctionnelles spécifiques pour le support dans les emplacements de stockage de la structure de stockage, par exemple pour leur support sur des interfaces de fixation telles que des équerres d'un rack,
- une résistance mécanique adaptée pour résister à une charge, sans fléchir et ainsi sans risque de chute, voire encore de résister même en cas de projection d'eau d'un système de lutte contre un incendie
- des surfaces fonctionnelles configurées pour être agrippées par des systèmes de préhension automatisés des moyens de transport, en vue de leur chargement/ déchargement automatisés, dans les emplacements de stockage, par exemple des reliefs positifs (en saillie) ou négatifs (en creux) destinés pour engager typiquement avec des parties mâles ou femelles, d'un préhenseur mécanisé

Les conteneurs C comprennent typiquement un fond et des rebords latéraux (ou parois latérales) configurés pour le maintien latéral du carton d'approvisionnement CaP ou pour le maintien latéral du carton de commande CaC

Le procédé de préparation de commandes selon la présente divulgation comprend :
/A/ Charger les cartons d'approvisionnement CaP, chacun sur un conteneur C pour former des ensembles de stockage ES,
/B/ Transporter les ensembles de stockage ES jusqu'à des emplacements de stockage de la structure de stockage GTP,
/C/ Préparer des commandes audit au moins un poste de préparation de commande, comprenant pour tout ou partie des commandes, le prélèvement PICK d'au moins un article Ai depuis l'un au moins des ensembles de stockage ES et placer ledit au moins un article Ai prélevé dans un carton de commande CaC.

Ainsi, /A/ prévoit charger les cartons d'approvisionnement CaP sur le conteneur C, ce qui permet avantageusement d'approvisionner l'ASRS, sans nécessiter le vidage du carton d'approvisionnement, et contrairement à la pratique connue par l'homme du métier décrite dans l'introduction pour laquelle le ou les articles du carton d'approvisionnement sont transférés dans un conteneur, après ouverture du carton.

Le chargement du carton d'approvisionnement dans le conteneur selon /
A/, typiquement opéré au niveau d'un poste d'approvisionnement PaP, est avantageusement effectué en conservant le contenu, élimine la nécessité de vider les cartons d'approvisionnement avant leur stockage, simplifiant ainsi le processus d'approvisionnement par rapport aux méthodes antérieures, et limitant les erreurs humaines.

De manière générale, ledit au moins un poste d'approvisionnement est typiquement distant de la structure de stockage GDP, typiquement en périphérie du système de stockage et de retrait 1, situé externe à la barrière BAR.

Le carton d'approvisionnement peut être maintenu fermé, lors du chargement. Les ensembles de stockage comprenant chacun le conteneur et le carton sont alors transférés fermés dans l'emplacement de stockage de la structure.

Dans un tel cas, un inventaire du carton d'approvisionnement peut être opéré lorsque le carton est ouvert, typiquement au niveau de la station de préparation de commande.

De manière générale lors d'un inventaire, au niveau du poste d'approvisionnement, ou au niveau de ladite au moins station de préparation de commande, l'opérateur peut renseigner, par utilisation de l'interface utilisateur, ou encore par lecture d'un code barre, le contenu (les articles) du carton afin de mettre à jour la base de données. L'interface permet en particulier de renseigner :
- la nature de l'article,
- le nombre des articles,

De manière générale, le chargement des cartons d'approvisionnement fermés sur les conteneurs, selon /A/, puis le transport des ensembles de stockage ES jusqu'aux emplacements de stockage selon /B/, présente plusieurs avantages opérationnels.

Tout d'abord, cette méthode réduit le nombre de manipulations supplémentaires nécessaires lors de l'approvisionnement, ce qui se traduit par une diminution du temps de traitement requis pour approvisionner la structure de stockage GTP.

En effet, grâce à ce processus, les ouvertures des cartons d'approvisionnement peuvent être reportées et effectuées directement au niveau d'au moins un poste de préparation de commande. Cela permet de gagner du temps en limitant les interventions intermédiaires et en déplaçant cette tâche vers un moment plus opportun dans le flux logistique.

De plus, lorsque le poste de préparation de commande 5a est équipé de plusieurs postes de travail dédiés à la préparation des commandes, il devient possible de répartir les tâches d'ouverture des cartons entre plusieurs opérateurs. Cette répartition permet également de mieux gérer les opérations d'inventaire et les mises à jour associées dans la base de données.

Ainsi, chaque poste de préparation de commande peut contribuer à ces mises à jour, améliorant l'efficacité globale du processus et réduisant les risques d'erreurs.

Selon une autre possibilité, le carton d'approvisionnement dudit ensemble de stockage peut être ouvert, au niveau du poste d'approvisionnement, puis transféré ouvert jusqu'à l'emplacement de stockage de la structure de stockage.

Dans un tel cas, un inventaire du carton d'approvisionnement peut être opéré lorsque le carton est ouvert, au niveau du poste d'approvisionnement PaP. Lors de cet inventaire, l'opérateur peut renseigner par une interface utilisateur le contenu du carton afin de mettre à jour la base de données.

Les moyens de transport automatisés sont configurés pour le transport, des ensembles de stockage depuis le poste d'approvisionnement, jusqu'aux emplacements de stockage de la structure de stockage GTP.

De manière générale, lesdits cartons d'approvisionnement CaP comprennent des volets de fermeture Vf, configurés pour fermer une ouverture supérieure du carton, et qui sont initialement fermés. Lors de l'ouverture du carton d'approvisionnement, une attention particulière peut être portée pour ouvrir le carton, sans dégrader les volets de fermeture, et de sorte à permettre une réutilisation du carton d'approvisionnement.

Lesdits ensembles de stockage comprenant chacun le conteneur et ledit carton d'approvisionnement peuvent être configurés pour autoriser l'ouverture des volets de fermeture.

De manière générale, une fois les volets des cartons ouverts, le procédé peut prévoir un maintien des volets de fermeture rabattus contre des parois latérales du carton par l'ajout d'un système de maintien.

Un tel système de maintien peut être par exemple propre au conteneur. Par exemple, selon un mode de réalisation illustré non limitativement à la [Fig.3], des rebords ou parois latérales des conteneurs peuvent permettre de bloquer les volets Vf, chacun maintenu intercalé entre un des rebords (ou parois latérales) du conteneur et une des parois du carton d'approvisionnement.

Un tel système de maintien peut être distinct du conteneur, et par exemple comprendre un lien, par exemple élastique, venant ceinturer les volets pour les bloquer rabattus contre les parois latérales du carton.

Un tel maintien des volets limite les risques d'interférence des volets, en particulier lors des transports des ensembles de stockage par les moyens. Un tel maintien est avantageux, lors des préparations de commandes en /C/ afin de faciliter les opérations de collecte manuelles, ou encore afin d'assurer un champ de vision libre à l'intérieur du carton pour une caméra associée au bras robotisé d'un poste de préparation de commande robotisée. Une telle caméra peut être configurée pour la reconnaissance des articles Ai contenus en vue de leur saisi.

Transporter les ensembles de stockage ES selon /B/ jusqu'à des emplacements de stockage de la structure de stockage GTP, est opéré sous la commande de l'unité de contrôle par les moyens de transport automatisé.

Préparer des commandes selon /C/ audit au moins un poste de préparation de commande, comprend pour tout ou partie des commandes, le prélèvement d'au moins un article Ai depuis l'un au moins des cartons d'approvisionnement CaP, ouverts, des ensembles de stockage ES et placer ledit au moins un article Ai prélevé dans un carton de commande CaC.

Lors de la préparation des commandes, le prélèvement d'articles directement depuis les cartons d'approvisionnement des ensembles de stockage et leur placement dans des cartons de commande rationalise le flux de travail, permettant une transition fluide des articles de l'approvisionnement à l'expédition. Cela réduit le temps de traitement des commandes et améliore la réactivité du système face aux demandes des clients.

En fonction du nombre et de la nature des articles de la commande, /C/ peut requérir un ou plusieurs ensembles de stockage, et le cas échéant plusieurs prélèvements d'au moins un article Ai depuis les cartons d'approvisionnement des différents ensembles de stockage.

En vue de préparation de commandes selon /C/, le ou les ensembles de stockage nécessaires à la préparation d'une commande, à partir desquels sont collectés le ou les articles Ai sont transportés préalablement au prélèvement, depuis leur emplacement de stockage dans la structure de stockage GTP et jusqu'à ladite au moins une station de préparation de commande 5a, 5b.

Le procédé peut donc prévoir entre /B/ et /C/ :
- /BC/ transporter le ou les ensembles de stockage depuis le ou les emplacements de stockage jusqu'à la station de préparation de commande 5a, 5b, ce transport étant opéré par les moyens de transport automatisés, sous la commande des instructions de l'unité de contrôle.

De manière notable, et selon le procédé selon la présente divulgation :
/D/ au moins un carton d'approvisionnement CaP est vidé par ledit prélèvement lors de l'une des préparations de commande en /C/ et dans lequel le carton d'approvisionneme nt CaP vidé dudit au moins un article est utilisé comme ledit carton de commande CaC pour au moins l'une des commandes en /C/.

L'utilisation des cartons d'approvisionnement vidés comme cartons de commande pour les expéditions ultérieures représente une solution de recyclage efficace, réduisant les déchets et les coûts liés à l'achat de nouveaux cartons, tout en contribuant à une empreinte écologique plus faible.

Plus particulièrement, un tel recyclage peut être opéré en utilisant les moyens de transport du système de stockage et de retrait 1, déjà nécessaires aux préparations de commande, autorisant déjà l'acheminement des articles stockés entre ladite structure de stockage GTP et ladite au moins une station de préparation de commande 5a, 5b, et donc avantageusement sans nécessiter des moyens de transport spécifiques à un tel recyclage, et contrairement à l'état de la technique décrit dans l'introduction qui prévoit l'ajout d'un convoyeur spécifique.

Dans certaines circonstances, le recyclage des cartons d'approvisionnement CaP en cartons de commande peut ne pas suffire à répondre aux besoins en cartons pour toutes les commandes en /C/. Cette insuffisance peut être causée par plusieurs facteurs. Par exemple, il est possible que certains cartons se dégradent au fil des manipulations, les rendant inadaptés pour une nouvelle utilisation.

De plus, la nature des cartons recyclés, notamment en ce qui concerne leurs dimensions et capacités, peut ne pas convenir à toutes les commandes. Il se peut donc que, selon les tailles spécifiques des commandes à traiter, certains cartons recyclés ne puissent pas être utilisés, nécessitant ainsi un approvisionnement complémentaire en cartons neufs.

Selon un mode de réalisation, lesdits chargements en /A/ comprennent également le chargement d'au moins un conteneur C avec un carton vide d'article, non recyclé d'un carton d'approvisionnement, typiquement neuf, pour former un ensemble de stockage vide ES0, et un transport dudit ensemble de stockage vide jusqu'à l'un des emplacements de stockage de la structure de stockage GTP. Selon un tel mode de réalisation l'un au moins des cartons de commande CaC en /C/ est le carton vide d'article (non recyclé d'un carton d'approvisionnement) dudit ensemble de stockage vide qui a été retiré dudit emplacement de stockage GPT.

En chargeant des conteneurs avec des cartons vides d'articles pour former des ensembles de stockage vides, le procédé permet de préparer à l'avance des cartons de commande prêts à être utilisés, optimisant ainsi le flux de travail, et en vue par exemple de répondre à différents volumes utiles pour les commandes.

Le transport de ces ensembles de stockage vides jusqu'aux emplacements de stockage assure une disponibilité immédiate des cartons de commande, réduisant le temps d'attente lors de la préparation des commandes. Un tel chargement peut encore permettre de disposer de différents cartons de commande de différentes dimensions/ capacités, stockés dans la structure de stockage sur les conteneurs.

Lors des préparations de commande, l'unité de contrôle peut sélectionner, parmi les différentes tailles/capacité de cartons vides destinés à constituer les cartons de commande, l'un des cartons dont la capacité est adaptée au volume des articles de la commande. L'unité de contrôle peut par exemple ; estimer par calcul un volume total des articles la commande et sélectionner parmi les cartons vides disponibles, le carton vide dont la capacité est supérieure au volume total estimé de la commande, proche du volume total estimé.

D'une manière générale, les cartons de commande contenant les articles des commandes en .C/ sont transportés jusqu'à la sortie So du système de stockage et de retrait par les moyens de transport du système, et sous les instructions de l'unité de contrôle.

D'une manière générale, et selon une première possibilité le ou les cartons d'approvisionnement vidés en /D/ à ladite station de préparation de commande sont utilisés en tant que carton(s) de commande(s) CaC à ladite au moins une station de préparation de commande, et en particulier sans nécessiter un stockage temporaire des cartons vidés dans la structure de stockage GTP.

Selon une deuxième possibilité, un carton d'approvisionnement d'un ensemble de stockage ES peut être extrait de la structure de stockage GPT et vidé selon /D/ et dans lequel le procédé comprend :
/DA/ un stockage de l'ensemble de stockage ES comprenant le conteneur et le carton vidé des articles dans la structure stockage GTP et dans lequel le carton d'approvisionnement utilisé en tant que carton de commande en /D/ est le carton dudit ensemble de stockage, vidé des articles, qui a été retiré dudit emplacement de stockage après le stockage selon /DA/.

En extrayant un carton d'un ensemble de stockage et en le vidant selon le procédé, le système permet de réutiliser le carton d'approvisionnement comme carton de commande, optimisant ainsi l'utilisation des ressources. Le stockage temporaire de l'ensemble de stockage comprenant le conteneur et le carton vidé dans la structure de stockage assure une gestion efficace de l'espace et des matériaux, réduisant le besoin de nouveaux cartons, tout en maximisant l'efficacité logistique, tout en maintenant la flexibilité nécessaire pour répondre aux variations de la demande.

Ainsi et de manière générale, les moyens de transport automatisés peuvent être configurés pour le transport des ensembles de stockage entre ladite au moins une station de préparation de commande et la structure de stockage, et configurés pour :
-- transporter, préalablement à l'une des préparations de commande en /C/, au moins un premier ensemble de stockage ES comprenant le conteneur C et le carton d'approvisionnement CaP contenant ledit au moins article nécessaire à l'une des commandes depuis ledit emplacement de stockage de la structure de stockage et jusqu'à ladite au moins une station de préparation de commande et,
-- transporter, préalablement à ladite préparation de commande en /C/, un deuxième ensemble de stockage comportent le conteneur et un carton de commande vide d'article (recyclé d'un carton d'approvisionnement ou non ), depuis ledit emplacement de stockage de la structure de stockage et jusqu'à ladite au moins une station de préparation de commande,
et dans lequel lors de la préparation de commande en /C/, ledit procédé comprend au niveau de la station de préparation de commande:
- transférer ledit au moins un article depuis ledit carton d'approvisionnement dudit premier ensemble de stockage, et jusqu'au carton de commande du deuxième ensemble de stockage ou acheminé par la deuxième ensemble.

De manière générale, le procédé peut comprendre entre l'une des préparations de commandes selon /C/ au niveau de la station de préparation de commande 5a, 5b, d'une part, et une finalisation de ladite commande, d'autre part :
- un transport et un stockage de l'ensemble de stockage ES comprenant le carton de commande CaC recevant ledit au moins un article de la commande dans un emplacement de stockage de la structure de stockage GTP, préalablement à un transport de l'ensemble de stockage contenant le carton de commande vers une sortie So dudit système de stockage et de retrait.

En transportant et stockant l'ensemble de stockage contenant le carton de commande dans la structure de stockage, le procédé permet de gérer efficacement les commandes en attente d'expédition. Cette étape intermédiaire assure que les commandes sont organisées et prêtes à être expédiées dès que nécessaire, optimisant ainsi le flux de travail et réduisant les délais de traitement. Le stockage temporaire des cartons de commande améliore la gestion des ressources et l'utilisation de l'espace, tout en garantissant une préparation rapide et efficace des expéditions.

De manière générale; lesdits moyens de transport automatisés peuvent ainsi être configurés pour :
- transporter, après la préparation de commande en /C/, ledit premier ensemble de stockage ES comprenant le conteneur C et le carton d'approvisionnement Cap auquel a été retiré ledit au moins un article depuis la station de préparation de commande 5a, 5b, et jusqu' à un des emplacements de stockage de la structure de stockage GTP, et/ou
- transporter ledit carton de commande CaC contenant les articles de la commande jusqu'à la sortie So dudit système de stockage et de retrait 1.

Selon un mode de réalisation, les moyens de transport automatisés comprennent au moins ladite flotte de chariots autoguidés 3 qui sont configurés pour transporter :
- les ensembles de stockage comprenant chacun le conteneur et le carton d'approvisionnement et/ou
- au moins un ensemble de stockage comprenant le conteneur et le carton de commande comprenant ledit au moins un article de la commande.

Selon un mode de réalisation, le transfert d'au moins un article Ai lors de l'une des préparations de commande en /C/, au niveau de la station de préparation de commande 5a, 5b, est opéré alors que le premier ensemble de stockage comprenant ledit carton d'approvisionnement CaP est supporté par un premier chariot autoguidé 3, et que le deuxième ensemble de stockage comprenant le carton de commande CaC est supporté par un deuxième chariot autoguidé 3, le premier chariot et le deuxième chariot agencés en deux emplacements de stationnement adjacents faisant face à un opérateur, ou positionnés dans le champs d'action d'un bras robotisé de la station de préparation de commande, et comme illustré à titre d'exemple à la [Fig.10].

Selon un mode de réalisation, le procédé comprend la finalisation de la commande comprenant le transport dudit carton de commande CaC jusqu'à une sortie So dudit système de stockage et de retrait 1 par l'un des chariots autoguidés supportant un ensemble de stockage comprenant un conteneur C et le carton de commande Cac contenant ladite commande. Ledit carton de commande Cac peut être transporté par le chariot autoguidé 3 en direction de la sortie, puis le procédé prévoit la séparation du carton de commande CaC comprenant la commande dudit conteneur, puis le transport du carton de commande séparé du conteneur jusqu'à la sortie du système de stockage et de retrait par exemple par un convoyeur typiquement à rouleaux.

D'autres avantages possibles du procédé selon la présente divulgation sont présentés ci-après.

Selon un mode de réalisation au moins l'une des commandes est une combinaison d'articles qui est identique au contenu du carton d'approvisionnement CAP dudit ensemble de stockage ES, ledit procédé peut prévoir
/E/ retirer ledit ensemble de stockage ES dudit emplacement de stockage et transporter ledit carton d'approvisionnement CaP dudit ensemble de stockage directement jusqu'à la sortie So du système de stockage et de retrait, en constituant le carton de commande Cac.

Un tel retrait dudit ensemble de stockage ES et transport du carton d'approvisionnement CaP selon /E/ est opéré par les moyens de transport automatisés, et éventuellement sans passer par ladite au moins une station de préparation de commande, en particulier lorsque les moyens de transport comportent une flotte de chariots autoguidés 3.

En particulier, et lorsque le carton d'approvisionnement Cap a été stocké fermé dans la structure de stockage GTP, il n'est pas nécessaire d'ouvrir le carton, pour qu'il constitue le carton de commande. Aucun prélèvement n'est nécessaire et son contenu peut être expédié tel quel.

En retirant un ensemble de stockage dont le contenu est identique à une commande, le procédé permet de transporter directement le carton d'approvisionnement à la sortie du système, simplifiant ainsi le processus de préparation des commandes.

Cette méthode élimine la nécessité de transférer les articles dans un nouveau carton de commande, réduisant ainsi le temps de traitement et les coûts associés à l'emballage supplémentaire.

Selon un autre mode de réalisation, au moins une des commandes en /C/ est une combinaison d'articles comprenant une sous-combinaison d'articles, correspondant au contenu du carton d'approvisionnement CaP dudit ensemble de stockage ES, duquel a été éventuellement ôté un ou plusieurs articles, et dans lequel lors de l'étape /C/:
- ledit ensemble de stockage ES est retiré dudit emplacement de stockage et transporté jusqu'à ladite au moins une station de préparation de commande 5a, 5b;
- au moins un deuxième ensemble de stockage ES comprenant un ou plusieurs articles complétant la combinaison d'articles par rapport à la sous-combinaison, est retiré d'un desdits emplacements de stockage et transporté jusqu'à la station de préparation de commande,
- au moins un article est transféré depuis ledit au moins un deuxième ensemble de stockage jusqu'audit carton d'approvisionnement dudit ensemble de stockage contenant la sous-combinaison jusqu'à obtention de la combinaison d'articles, puis successivement
- ledit carton d'approvisionnement dudit ensemble de stockage contenant la combinaison d'article est transporté, de préférence après fermeture du carton, en tant que carton de commande jusqu'à une sortie du système de stockage et de retrait.

Les opérations de transport sont opérées par les moyens de transport automatisés, sous les instructions de l'unité de contrôle.

En permettant la préparation de commandes comprenant une sous-combinaison d'articles correspondant au contenu d'un carton d'approvisionnement, le procédé optimise l'utilisation des ressources disponibles.

Le transfert d'articles depuis un deuxième ensemble de stockage pour compléter la combinaison d'articles dans le carton d'approvisionnement réduit le besoin de manipulations supplémentaires, améliorant ainsi l'efficacité du processus de préparation des commandes.

Cette méthode permet une flexibilité accrue dans la gestion des stocks, car elle facilite l'assemblage de commandes complexes tout en minimisant les mouvements et les coûts associés.

Selon un autre aspect, la présente divulgation concerne un ensemble comprenant un système de stockage et de retrait automatisé susceptible de convenir pour la mise en œuvre du procédé selon la présente divulgation et des cartons contenant un ou plusieurs articles, ledit système de stockage et de retrait , comprenant :
- des conteneurs C,
- une structure de stockage GTP comprenant les emplacements de stockage pour les conteneurs,
- au moins une station de préparation de commande 5a, 5b distante de la structure de stockage,
- des moyens de transport automatisés configurés pour le transport des conteneurs entre ladite au moins une station de préparation de commande et la structure de stockage, et des moyens de transport automatisés configurés pour le transport de stockage entre ladite au moins une station de préparation de commande et une sortie du système de stockage et de retrait

Ledit système de stockage et de retrait peut être en particulier celui qui été décrit dans le cadre du procédé de préparation de commande. La structure de stockage GTP peut être de différentes conceptions, et les moyens de transport automatisé de différentes natures, comme décrit précédemment. Les moyens de transport sont commandés sous les instructions de l'unité de contrôle.

Selon un mode de réalisation, les moyens de transport comprenant en particulier une flotte de chariots autoguidés 3.

Les chariots autoguidés sont équipés chacun d'un module de communication, configuré pour recevoir et transmettre des données avec ladite unité de contrôle distante, informatique, de manière sans fil, et dans lequel ladite unité de contrôle, distante, assure la gestion et le contrôle des moyens de transport y compris la gestion des trajectoires de guidage des chariots autoguidés sur une surface de roulement.

Ladite unité de contrôle peut en particulier présenter les fonctions qui ont été décrites dans le cadre du procédé.

Selon ledit ensemble selon la présente divulgation ;
a) les cartons contenant le ou les articles sont reçus sur les conteneurs C en formant des ensembles de stockage ES,
b) les ensembles de stockage sont stockés dans les emplacements de stockage de la structure de stockage GDP.

Selon ledit ensemble selon présente divulgation ; ladite unité de contrôle comporte un ou plusieurs processeurs, une mémoire et un jeu d'instructions configurées pour la mise en œuvre du procédé de préparation de commandes selon la présente divulgation.

En particulier les instructions sont configurées pour commander les moyens de transport, pour recycler un carton vidé à ladite au moins une station de préparation de commande, comme carton de commande, à ladite station de préparation de commande, pour une commande ultérieure.

Les ensembles de stockage comprennent de préférence des conteneurs, recevant des cartons mono-articles présentant plusieurs articles structurellement identiques, à partir desquels peuvent être opérés les prélèvements lors de l'étape /C/ du procédé.

La structure de stockage reçoit encore des ensembles de stockage comprenant des conteneurs, recevant des cartons destinés à servir de carton de commande, ouverts, vide d'articles. Il peut s'agit de cartons vides d'article, ayant contenu un ou plusieurs articles, qui ont été vidés à ladite station de préparation de commande, ou encore de cartons, typiquement neufs chargés vides au poste d'approvisionnement.

Nous décrivons un mode de réalisation illustré à la [Fig.8].

Le système de stockage et de retrait comprend une structure de stockage qui comprend une pluralité de racks de stockage 2, disposés parallèles en eux, séparés par des allées. Les racks de stockage comprennent des montants entretoisés en appui sur un sol de l'entrepôt.

Chaque rack de stockage 2 comprend plusieurs colonnes d'emplacements de stockage, superposés, réparties suivant la longueur du rack, les emplacements de stockage étant matérialisés par des couples d'interfaces mécaniques, telles que des équerres, solidaires des montants, les deux interfaces mécaniques tournées l'un vers l'autre pour soutenir un conteneur. Les emplacements de stockage présentent des ouvertures latérales, autorisant leur chargement et déchargement.

Les racks de stockage sont desservis par une flotte de chariots autoguidés 3, qui comprennent des moyens chacun des moyens de déplacements horizontaux, tels que des roulettes motorisées configurées pour déplacer le chariot autoguidé sur une surface de roulement telle que le sol ou une table, par exemple selon les directions X et Y
et des moyens de grimpe comprenant typiquement des roues dentées, motorisées configurées pour se coupler avec des éléments de grimpe s'étendant verticalement suivant la hauteur des racks de stockage, typiquement solidaires des montants des racks de stockage, et configurés pour autoriser le déplacement vertical du chariot autoguidé jusqu'à un niveau de hauteur d'un emplacement de stockage. Les éléments de grimpe peuvent être typiquement des crémaillères ou des chaines à rouleaux, s'étendant verticalement et solidaires des montants des racks de stockage. Les chariots autoguidés comprennent chacun, un dispositif de préhension configuré pour charger un conteneur dans l'un des emplacements de stockage ou au contraire le décharger.

Le dispositif de préhension comprend un support monté mobile par rapport à un châssis dudit chariot entre :
- une position déployée, dans laquelle ledit support s'étend au moins partiellement sur un bord latéral dudit chariot hors de l'alignement dudit châssis ; et
- une position escamotée, dans laquelle ledit support est logé en vis-à-vis dudit châssis.

Dans la position déployée, le support mobile permet de soulever le conteneur dudit emplacement de stockage lorsque le chariot autoguidé 3 est déplacé par les moyens de grimpe, avant de rétracter le support mobile jusqu'à la position escamotée, pour décharger un emplacement de stockage. Inversement, le chargement d'un conteneur dans un emplacement de stockage est opéré en déployant le support mobile de la position escamotée jusqu'à la position déployée, puis en déplaçant le chariot autoguidé à la descente jusqu'à que le conteneur repose dans ledit emplacement de stockage.

Ainsi, les chariots autoguidés 3 sont configurés pour circuler au sol, dans une zone délimitée par une barrière physique BR, et jusque dans une des allées entres deux racks de stockage, puis se coupler au rack de stockage, au droit d'une des colonnes d'emplacement de stockage, puis monter jusqu'à niveau de l'emplacement de stockage à desservir. La barrière physique BR empêche l'accès de la zone de circulation des chariots à un opérateur en fonctionnement nominal. Une telle barrière physique présente une porte d'accès autorisant un accès à la zone sécurisé, en cas de maintenance.

Un poste d'approvisionnement PaP est situé en dehors de la zone sécurisée, et permet la mise en œuvre de l'étape /A/ du procédé à savoir un chargement d'un carton d'approvisionnement CaP contenant un ou plusieurs articles, typiquement structurellement identiques, sur un conteneur C, en formant un ensemble stockage, ledit carton d'approvisionnement pouvant éventuellement rester fermé.

Un convoyeur d'entrée 6 est configuré pour acheminer automatiquement ledit ensemble de stockage jusqu'à un dispositif de transfert 7, qui est configuré pour charger ledit ensemble de stockage sur l'un des chariots autoguidés stationné au pied du dispositif de transfert 7.

Ladite unité de contrôle communique sans fil avec un module de communication du chariot autoguidé supportant ledit ensemble de stockage pour assurer son déplacement au sol jusqu'à une allée entre deux racks, puis après couplage des roues dentées avec les éléments de grimpe, commande un déplacement en hauteur du chariot autoguidé 3 jusqu'à hauteur de l'un vide des emplacements de stockage qui est chargé par déploiement du support mobile.

Des stations de préparation de commande 5a sont agencées, en particulier en périphérie de la barrière périphérique s'agissant de stations de commande manuelles 5a pour lesquels des opérateurs assurent la préparation de commandes en dehors de la barrière physique BR. Le système comprend encore des stations de préparations de commande automatisées/robotisées 5b.

Au fur et à mesure des commandes, les cartons d'approvisionnent Cap des ensembles de stockage sont vidés et peuvent être éventuellement stockés temporairement dans les racks de stockage par les chariots autoguidés.

Durant l'exécution d'une commande l'unité de contrôle peut sélectionner parmi les cartons vides disponibles stockés dans les racks de stockage, un des cartons vide dont la capacité est adaptée pour contenir les articles d'une commande.

L'unité de contrôle envoie des instructions à l'un des chariots autoguidés 3 pour acheminer ledit ensemble de stockage comprenant le carton vide sélectionné depuis ledit emplacement de stockage du rack jusqu'à la station de préparation de commande, par exemple la station de commande manuelle.

L'opérateur récupère le carton vide destiné à être recyclé comme carton de commande en le séparant du conteneur. L'unité de contrôle achemine ensuite le ou les ensembles de stockage contenant les articles depuis la structure de stockage jusqu'à la station de préparation de commande, pour permettre à l'opérateur de prélever le ou les articles directement depuis les cartons d'approvisionnement ouverts des différents ensembles, et de les transférer dans le carton de commande CaC.

Une fois le ou les prélèvements terminés, l'opérateur ferme le carton en rabattant les volets de fermeture Vf puis transfert le carton de commande CaC fermé qui est acheminé par un convoyeur de sortie jusqu'à une sortie So du système de stockage et de retrait 1.

Le mode de réalisation de la [Fig.9] et 10 comprend également des racks de stockage 2 et des chariots autoguidés, configurés pour circuler au sol, et accéder aux emplacements de stockage pour les charger et les décharger des ensembles de stockage, à l'instar de la [Fig.8].

Ce mode de réalisation se distingue en ce que le transfert d'au moins un article lors de l'une des préparations de commande en /C/, au niveau de la station de préparation de commande, est opéré alors que le premier ensemble de stockage comprenant ledit carton d'approvisionnement CaP est supporté par un premier chariot autoguidé 3a, et que le deuxième ensemble de stockage comprenant le carton de commande CaC, typiquement recyclé, est supporté par un deuxième chariot autoguidé 3b.

Le premier chariot 3a et le deuxième chariot 3b sont agencés en deux emplacements de stationnement adjacents, faisant face à un opérateur permettant à l'opérateur de prélever un article du carton d'approvisionnement CaP et de le déposer dans le carton de commande (non illustré). Les deux emplacements de stationnement peuvent encore être agencés dans le champ d'action d'un bras robotisé de la station de préparation de commande robotisé 5b et comme illustré à la [Fig.10] de sorte que le prélèvement est opéré par le bras robotisé.

Une fois la commande finalisée, le carton de commande peut être fermé, et ledit ensemble comprenant le conteneur et carton de commande fermé peut être acheminé par le second chariot 5b vers une sortie du système de stockage et de retrait.

De manière générale, et comme illustré schématiquement à la [Fig.4], le procédé permet en particulier de manière successive de:
- charger les ensembles de stockage en /A/, les cartons d'approvisionnement CaP fermés, selon une étape 1 dans la structure de stockage GTP,
- d'ouvrir les cartons d'approvisionnement CaC des ensemble de stockage selon une étape 2,
- de réaliser un inventaire et mise à jour de la base de donnée et/ou de prélever des articles lors de la préparation d'une commande selon une étape 3,
- de fermer les cartons de commandes, typiquement recyclés, contenant les articles prélevés, selon l'étape 4,
- de sortir les cartons de commande fermés de la commande, qui ont pu être stockés temporairement dans la structure de stockage.

La [Fig.4bis] est un schéma détaillé du prélèvement d'articles à partir de deux ensembles de stockage ES comprenant des cartons d'approvisionnement CAP mono-articles, et leur transfert dans une ensemble comprenant un conteneur et un carton de commande CaC, typiquement recyclé.

### Avantages

En résumé les solutions techniques selon la présente divulgation peuvent permettre d'obtenir tout ou partie des avantages suivants :
- Optimisation de l'approvisionnement : Le chargement direct des cartons d'approvisionnement sur des conteneurs élimine la nécessité de vider les cartons avant le stockage, simplifiant ainsi le processus et réduisant les erreurs humaines.
- Efficacité logistique : Le transport des ensembles de stockage vers les emplacements de stockage optimise l'utilisation de l'espace et améliore l'efficacité opérationnelle, réduisant le temps de traitement nécessaire.
- Rationalisation du flux de travail : Le prélèvement d'articles directement depuis les ensembles de stockage pour les placer dans des cartons de commande permet une transition fluide des articles de l'approvisionnement à l'expédition, réduisant le temps de traitement des commandes.
- Recyclage efficace : L'utilisation des cartons d'approvisionnement vidés comme cartons de commande réduit les déchets et les coûts liés à l'achat de nouveaux cartons, contribuant à une empreinte écologique plus faible.
- Flexibilité et adaptabilité : Le système permet de gérer efficacement les commandes complexes, en facilitant l'assemblage de combinaisons d'articles tout en minimisant les mouvements et les coûts associés.
- Réduction des coûts : L'automatisation et l'optimisation des processus réduisent les coûts opérationnels et augmentent la capacité de réponse du système aux variations de la demande.

Ces avantages contribuent à une amélioration globale de l'efficacité, de la durabilité et de la rentabilité du système de stockage et de retrait automatisé.

### Liste des signes de référence

- 1. Système de stockage et de retrait,
- 2. Racks de stockage,
- 3. Chariots autoguidés,
- 3a, 3B. Premier chariot autoguidé et deuxième chariot autoguidé
- 4. Allée (entre les racks)
- 5a. Station de préparation de commande manuelle,
- 5b. Station de préparation de commande robotisée,
- 6. Convoyeur d'entrée (des ensembles de stockage comprenant chacun un conteneur et un carton d'approvisionnement)
- 7. Dispositif de transfert (configuré pour le transfert d'un ensemble de stockage du convoyeur d'entrée sur un chariot autoguidé)
- Ai. Articles,
- BR. Barrière physique,
- ES. Ensembles de stockage,
- ER. Entrée du système de stockage et de retrait,
- So. Sortie du système de stockage et de retrait,
- C. Conteneurs,
- CaC. Carton de commande,
- CaP. Cartion d'approvisionnement,
- GPT. Structure de stockage,
- PICK. Prélèvement,
- PaP. Poste d'approvisionnement,
- SMA. Stockage de masse,
- Vf. Volets de fermeture (carton),
- IN. entrée,
- OUT. Sortie.

## Revendications

1. Procédé de préparation de commandes mis en œuvre dans un système de stockage et de retrait automatisé (1) comprenant :
- une structure de stockage (GTP) présentant des emplacements de stockage,
- au moins une station de préparation de commande pour la préparation des commandes,
- des conteneurs (C) destinés à recevoir des cartons d'approvisionnement (CaP) et des cartons de commande (CaC)
le procédé comprenant un approvisionnement de la structure de stockage à partir d'articles (Ai) provenant de cartons d'approvisionnement contenant chacun au moins un article (Ai),
le procédé comprenant :
/A/ Charger les cartons d'approvisionnement (CaP), chacun sur un conteneur (C) pour former des ensembles de stockage (ES),
/B/ Transporter les ensembles de stockage (ES) jusqu'à des emplacements de stockage de la structure de stockage (GTP),
/C/ Préparer des commandes audit au moins un poste de préparation de commande, comprenant pour tout ou partie des commandes, le prélèvement (PICK) d'au moins un article (Ai) depuis l'un au moins des ensembles de stockage (ES) et placer ledit au moins un article (Ai) dans un carton de commande (CaC),
/D/ au moins un carton d'approvisionnement (CaP) étant vidé par ledit prélèvement lors de l'une des préparations de commande en / C/ et dans lequel le carton d'approvisionnement (CaP) vidé dudit au moins un article est utilisé comme ledit carton de commande (CaC) pour au moins l'une des commandes en /C/.

2. Procédé de préparation d'au moins une commande selon la revendication 1 dans lequel les cartons d'approvisionnement (CaC) sont mono-articles, en tout ou partie, comprenant chacun un ou plusieurs articles (Ai) structurellement identiques.

3. Procédé de préparation de commandes selon l'une des revendications 1 à 3, dans lequel, lors des chargements en /A/, tout ou partie des cartons d'approvisionnement (CaP) chargés sur les conteneurs (C) sont des cartons fermés et dans lequel lesdits ensemble de stockage contenant les cartons sont stockés fermés dans lesdits emplacement de stockage (ES) de la structure de stockage (GTP).

4. Procédé de préparation d'au moins une commande selon l'une des revendications 1 à 2, dans lequel, lors des chargements en /A/, tout ou partie des cartons d'approvisionnement (CaP) chargés sur les conteneurs (Co) sont des cartons ouverts, et dans lequel lesdits ensemble de stockage contenant les cartons sont stockés ouverts dans lesdits emplacements de stockage (ES) de la structure de stockage (GTP).

5. Procédé de préparation de commandes selon l'une des revendications 1 à 4, dans lequel au moins une commande est une combinaison d'articles qui est identique au contenu du carton d'approvisionnement (CAP) dudit ensemble de stockage (ES), ledit procédé prévoit
/E/ retirer ledit ensemble de stockage (ES) dudit emplacement de stockage et transporter ledit carton d'approvisionnement (CaP) dudit ensemble de stockage directement jusqu'à la sortie du système de stockage et de retrait, en constituant le carton de commande (Cac).

6. Procédé de préparation de commandes selon l'une des revendications 1 à 5, dans lequel lesdits chargements en /A/ comprennent également le chargement d'au moins un conteneur (C) avec un carton vide d'article, pour former un ensemble de stockage vide (ES0), et
un transport dudit ensemble de stockage vide jusqu'à l'un des emplacements de stockage de la structure de stockage (GTP),
et dans lequel l'un au moins des cartons de commande (CaC) en /C/ est le carton vide d'article dudit ensemble de stockage vide qui a été retiré dudit emplacement de stockage (GPT).

7. Procédé de préparation commandes selon l'une des revendications 1 à 6, dans lequel au moins une des commandes en /C/ est une combinaison d'articles comprenant une sous-combinaison, correspondant au contenu du carton d'approvisionnement (CaP) dudit ensemble de stockage (ES), duquel a été éventuellement ôté un ou plusieurs articles,
et dans lequel lors de l'étape /C/ :
- ledit ensemble de stockage (ES) est retiré dudit emplacement de stockage et transporté jusqu'à ladite au moins une station de préparation de commande ;
- au moins un deuxième ensemble de stockage (ES) comprenant un ou plusieurs articles complétant la combinaison d'articles par rapport à la sous-combinaison, est retiré d'un desdits emplacements de stockage et transporté jusqu'à la station de préparation de commande,
- au moins un article est transféré depuis ledit au moins un deuxième ensemble de stockage jusqu'audit carton d'approvisionnement dudit ensemble de stockage contenant la sous-combinaison jusqu'à obtention de la combinaison, puis successivement
- ledit carton d'approvisionnement dudit ensemble de stockage contenant la combinaison est transporté en tant que carton de commande jusqu'à une sortie du système de stockage et de retrait.

8. Procédé de préparation de commandes selon l'une des revendications 1 à 7 dans lequel un carton d'un ensemble de stockage (ES) est extrait de la structure de stockage (GPT) et vidé selon /D/
et dans lequel le procédé comprend :
/DA/ un stockage de l'ensemble de stockage (ES) comprenant le conteneur et le carton vidé des articles dans la structure stockage (GTP),
et dans lequel le carton d'approvisionnement utilisé en tant que carton de commande en /D/ est le carton dudit ensemble de stockage, vidé des articles, qui a été retiré dudit emplacement de stockage après le stockage selon /DA/.

9. Procédé de préparation d'au moins une commande selon l'une des revendications 1 à 8, dans lequel le système de stockage et de retrait automatisé (1) comprend :
- la structure de stockage (GTP) comprenant les emplacements de stockage (ES),
- les conteneurs (C) configurés pour être stockés dans les emplacements de stockage,
- ladite au moins une station de préparation de commande, distante de la structure de stockage, au niveau desquelles l'assemblage de la commande lors des préparation de commande selon /C/,
- des moyens de transport automatisés configurés pour le transport des ensembles de stockage entre ladite au moins une station de préparation de commande et la structure de stockage, configurés pour :
-- transporter, préalablement à l'une des préparations de commande en /C/, au moins un premier ensemble de stockage (ES) comprenant le conteneur (C) et le carton d'approvisionnement (CaP) contenant ledit au moins article nécessaire à l'une des commandes depuis ledit emplacement de stockage de la structure de stockage et jusqu'à ladite au moins une station de préparation de commande et,
-- transporter, préalablement à ladite préparation de commande en / C/, un deuxième ensemble de stockage comportent le conteneur et un carton de commande, depuis ledit emplacement de stockage de la structure de stockage et jusqu'à ladite au moins une station de préparation de commande,
et dans lequel lors de ladite préparation de commande en /C/, ledit procédé comprend :
- transférer ledit au moins un article depuis ledit carton d'approvisionnement dudit premier ensemble de stockage, et jusqu'au carton de commande du deuxième ensemble de stockage.

10. Procédé de préparation de commandes selon la revendication 9, dans lequel lesdits moyens de transports automatisés sont configurés pour :
- transporter, après la préparation de commande en /C/, ledit premier ensemble de stockage (ES) comprenant le conteneur(Co) et le carton d'approvisionnement auquel a été retiré ledit au moins un article depuis la station de préparation de commande (5a, 5b), et jusqu'à un des emplacements de stockage de la structure de stockage (GTP), et/ ou
- transporter ledit carton de commande (CaC) jusqu'à une sortie (So) dudit système de stockage et de retrait (1)

11. Procédé de préparation de commandes selon l'une des revendications 1 à 10 comprenant entre l'une des préparations d'une commande selon /C/ au niveau de la station de préparation de commande (5a, 5b), d'une part, et une finalisation de ladite commande, d'autre part :
- un transport et un stockage de l'ensemble de stockage (ES) comprenant le carton de commande (CaC) recevant ledit au moins un article de la commande dans un emplacement de stockage de la structure de stockage (GTP), préalablement à un transport de l'ensemble de stockage contenant le carton de commande vers une sortie (So) dudit système de stockage et de retrait.

12. Procédé de préparation de commandes selon l'une des revendications 1 à 11, dans lequel le système de stockage et de retrait automatisé comprend au moins un poste d'approvisionnement pour les chargements /A/ desdits cartons d'approvisionnement (CaP) sur les conteneurs (C) en formant des ensembles de stockage, ledit poste de approvisionnement étant distant de la structure de stockage (GDP), et des moyens de transport automatisés configurés pour le transport, des ensembles de stockage depuis le poste de réapprovisionnement, jusqu'aux emplacements de stockage de la structure de stockage (GTP).

13. Procédé de préparation de commandes selon l'une des revendications 9 à 12 dans lequel les moyens de transport automatisés comprennent au moins une flotte de chariots autoguidés (3) configurés pour transporter :
- les ensembles de stockage comprenant chacun le conteneur et le carton d'approvisionnement et/ou
- au moins un ensemble de stockage comprenant le conteneur et le carton de commande comprenant ledit au moins un article de la commande.

14. Procédé de préparation de commandes selon la revendication 9
et 13, dans lequel le transfert d'au moins un article lors de l'une des préparations de commande en /C/, au niveau de la station de préparation de commande, est opéré alors que le premier ensemble de stockage comprenant ledit carton d'approvisionnement est supporté par un premier chariot autoguidé, et que le deuxième ensemble de stockage comprenant le carton de commande est supporté par un deuxième chariot autoguidé, le premier chariot et le deuxième chariot agencés en deux emplacements de stationnement adjacents faisant face à un opérateur, ou positionnés dans le champs d'action d'un bras robotisé de la station de préparation de commande.

15. Procédé de préparation de commandes selon l'une des revendications 13 ou 14, comprenant une finalisation de commande comprenant le transport dudit carton de commande (CaC) jusqu'à une sortie (So) dudit système de stockage et de retrait (1) par un des chariots autoguidés supportant un ensemble de stockage comprenant un conteneur (C) et le carton de commande (Cac) contenant ladite commande et dans lequel le carton de commande (Cac) est transporté par le chariot autoguidé en direction de la sortie, et dans lequel
le procédé prévoit la séparation du carton de commande (CaC) comprenant la commande dudi conteneur, puis le transport du carton de commande (CaC) séparé du conteneur (Cà jusqu'à la sortie du système de stockage et de retrait.

16. Procédé de préparation de commandes selon l'une des revendications 1 à 15, dans lequel lesdits cartons d'approvisionnement (Cap) comprennent des volets de fermeture (Vf), configurés pour fermer une ouverture supérieure du carton, et dans lequel lesdits ensembles de stockage comprenant chacun le conteneur et ledit carton d'approvisionnement sont configurés pour autoriser l'ouverture des volets de fermeture, et dans lequel procédé on assure l'ouverture des conteneurs desdits ensembles de stockage par l'ouverture des volets de fermeture et un maintien des volets de fermeture rabattus contre des parois latérales du carton par l'ajout d'un système de maintien.

17. Procédé de préparation de commandes selon l'une des revendications 1 à 16, dans lequel les conteneurs (Co) comprenant un fond et
des rebords latéraux configurés pour le maintien latéral du carton d'approvisionnement (CaP) ou pour le maintien du carton de commande (CaC)

18. Ensemble comprenant un système de stockage et de retrait automatisé susceptible de convenir pour la mise en œuvre du procédé selon l'une des revendications 1 à 17 et des cartons contenant un ou plusieurs articles, ledit système de stockage et de retrait , comprenant :
- des conteneurs (C),
- une structure de stockage (GTP) comprenant les emplacements de stockage pour les conteneurs,
- au moins une station de préparation de commande (5a, 5b), distante de la structure de stockage,
- des moyens de transport automatisés configurés pour le transport des conteneurs entre ladite au moins une station de préparation de commande et la structure de stockage, et des moyens de transport automatisés configurés pour le transport de stockage entre ladite au moins une station de préparation de commande et une sortie du système de stockage et de retrait comprenant une flotte de chariots autoguidés (3)
les chariots autoguidés étant équipés chacun d'un module de communication, configuré recevoir et transmettre des données avec une unité de contrôle distante, informatique, de manière sans fil, et dans lequel ladite unité de contrôle, distante, assure la gestion et le contrôle des moyens de transport y compris la gestion des trajectoires de guidage des chariots autoguidés sur une surface de roulement,
**caractérisé en ce que :**
a) les cartons sont reçus sur les conteneurs (Co) en formant des ensembles de stockage (ES),
b) les ensembles de stockage sont stockés dans les emplacements de stockage de la structure de stockage (GDP)
et dans lequel ladite unité de contrôle comporte un ou plusieurs processeurs, une mémoire et un jeu d'instructions configurées pour la mise en œuvre du procédé de préparation de commandes selon l'une des revendications 1 à 16.

19. Ensemble selon la revendication 18, dans lequel les ensembles de stockage comprennent des conteneurs, recevant des cartons mono-articles présentant plusieurs articles structurellement identiques.

20. Ensemble selon la revendication 18 ou 20 dans lequel la structure de stockage reçoit dans les emplacements de stockage, des ensembles de stockage comprenant des conteneurs, recevant des cartons destinés à servir de cartons de commande, ouverts, vides d'article.
